# EUROPEAN PATENT APPLICATION

(11) **EP 4 656 583 A1**
(43) Date of publication of application: **03.12.2025**
(21) Application number: 25179404.6
(22) Date of filing: 28.05.2025
(51) Int. Cl.: B66F 9/075, B60H 1/00, B60K 1/04

(54) **LIFT TRUCK**

(30) Priority: 29.05.2024 IT 202400012316
(71) Applicant: Toyota Material Handling Manufacturing Italy S.p.A, 40132 Bologna (IT)
(72) Inventor: PESSO, Tommaso, POGGIO RENATICO (IT)
(74) Representative: Casadei, Barbara

(57) **Abstract**

Described is a lift truck comprising a drive axle (4) having an axis (4a) of rotation, an electric motor (8) for driving the drive axle (4) and motion transmission means (9) which connect the electric motor (8) to the drive axle (4);
the electric motor (8) has the transmission axis (8a) perpendicular to the axis (4a) of the drive axle (4);
an energy storage unit (11) configured to power the electric motor (8);
the energy storage unit (11) comprises a plurality of cells (12) positioned relative to each other in such a way as to define a block of cells (13) in which there is a compartment (14) for housing at least part of the electric motor (8);
at least part of the block of cells (13) is aligned with at least part of the electric motor (8) relative to a same height from the ground.

## Description

This invention relates to a lift truck.

More specifically, a lift truck equipped with a transversal electric motor.

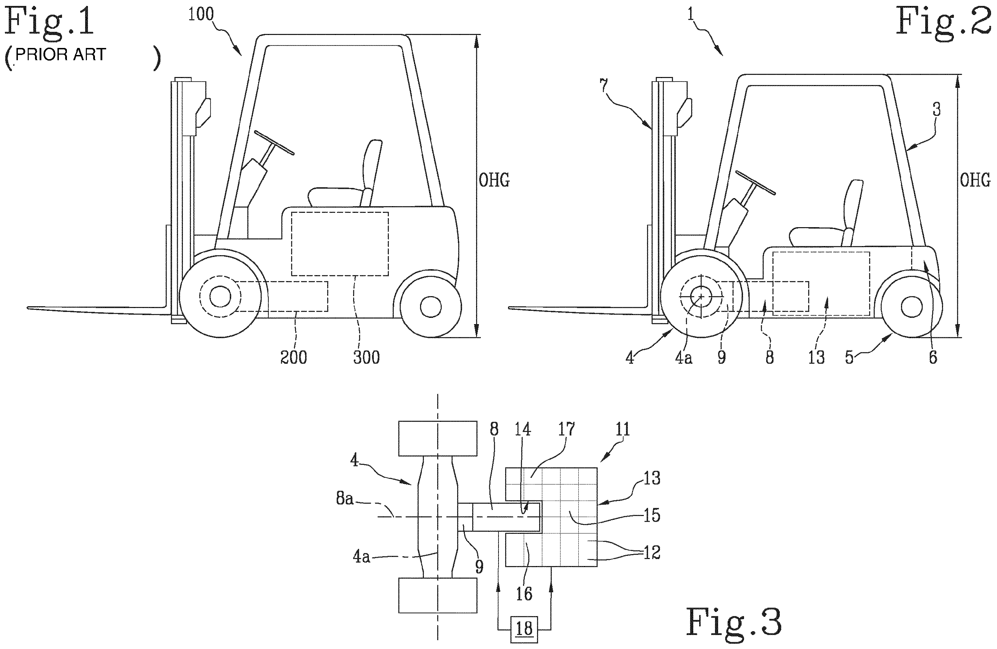

Figure 1 shows by way of example a lift truck 100 equipped with a transversal electric motor 200 of known type.

This prior art type allows a compact front axle to be used, since the electric motor 200 is positioned transversally relative to the front axle, with a consequent reduction of the longitudinal dimension of the lift truck 100, that is to say, the dimension along the direction of travel, which is fundamental for the projecting part.

As is known, this advantage is unfortunately balanced out by a drawback, that is to say, the arrangement of a battery 300 in a raised position, above the electric motor 200, which consequently results in a raising of the driver protection, defined by the acronym "OHG" (Overhead Guard). This height is incompatible with certain conditions of use of the lift truck, such as, for example, the storage in containers.

An example of a work vehicle in which the battery is positioned at the same height as the electric motor is given in document EP3702312.

In this circumstance, the need has been felt of finding a new solution of a lift truck equipped with an electric motor positioned transversally with respect to a front axle which had a lower overhead guard (OHG) than the prior art lift trucks.

In this context, the Applicant has developed an upright the features of which are set out in independent claim 1.

Further features and advantages of the invention are more apparent from the non-limiting description which follows of a preferred embodiment of a lift truck as illustrated in the accompanying drawings, in which:
- Figure 1 is a schematic view of a lift truck described in the prior art;
- Figure 2 is a schematic view of a lift truck according to this invention;
- Figure 3 is a schematic top view of a detail of Figure 2.

With reference to Figure 2, the numeral 1 denotes a lift truck according to this invention.

The lift truck 1 comprises a frame 2 and a driver's cab 3.

The lift truck 1 comprises a front drive axle 4 and a rear driven axle 5. The frame 2 of the lift truck 1 is connected to a counterweight 6, or ballast, positioned in the rear part of the lift truck 1.

The lift truck 1 is known as "counterbalanced".

The lift truck 1 comprises an upright 7 for moving a load connected to the frame 2 in the front part of the lift truck 1 in front of the driver's cab 3.

The drive axle 4 extends mainly along an axis 4a of rotation of the axle itself.

The lift truck 1 comprises an electric motor 8 for moving the drive axle 4 and motion transmission means 9 which connect the electric motor 8 to the drive axle 4.

The electric motor 8 has the relative transmission axis perpendicular to the axis 4a of the drive axle 4.

Advantageously, the proposed transmission system is more economical than the coaxial versions.

An energy storage unit 11 is configured to power the electric motor 8.

For example, the energy storage unit 11 is a lithium ion battery.

The energy storage unit 11 comprises a plurality of cells 12 positioned relative to each other in such a way as to define a block of cells 13 in which there is a compartment 14 for housing at least part of the electric motor 8.

The block of cells 13 is U-shaped.

In other words, the block of cells 13 comprises a main body 15 and a first arm 16 and a second arm 17 which extend from the main body 15.

The first arm 16 and the second arm 17 are facing and parallel to each other defining the compartment 14.

The distance between the first arm 16 and the second arm 17 determines the dimensions of the compartment 14 along a direction parallel to the axis 4a of the drive axle 4.

In this way, at least part of the block of cells 13 and of the electric motor 8 are aligned with each other along a same height above the ground.

Advantageously, the possibility of aligning at least part of the block of cells 13 and of the electric motor 8 along a same height allows the positioning of the driver at a height lower than that of the prior art, and therefore the cab 3 reaches a lower height, see the comparison between Figure 1 and Figure 2.

According to the prior art of Figure 1 it should be noted that the electric motor 200 and the battery 300 are misaligned since the battery 300 is positioned at a greater height than the electric motor 200.

The so-called "OHG" of the lift truck 1 according to this invention is lower than that of a prior art lift truck.

The lift truck 1 comprises a system 18 for cooling the electric motor 8 and the block of cells 13 of the energy storage unit 11.

The cooling system 18 has a liquid as the cooling fluid.

## Claims

1. A lift truck comprising a drive axle (4) having an axis (4a) of rotation, an electric motor (8) for driving the drive axle (4) and motion transmission means (9) which connect the electric motor (8) to the drive axle (4);
the electric motor (8) has the transmission axis (8a) perpendicular to the axis (4a) of the drive axle (4);
an energy storage unit (11) configured to power the electric motor (8);
the energy storage unit (11) comprises a plurality of cells (12) positioned relative to each other in such a way as to define a block of cells (13) at least part of the block of cells (13) is aligned with at least part of the electric motor (8) relative to a same height;
**characterised in that** in the block of cells (13) there is a compartment (14) for housing at least part of the electric motor (8);

2. The lift truck according to the preceding claim, **characterised in that** the block of cells (13) has a U-shape wherein a main body (15) and a first arm (16) and a second arm (17) which extend from the main body (15) and are facing and parallel to each other defining the compartment (14) are identifiable; the distance between the first arm (16) and the second arm (17) determines the dimensions of the compartment (14) along a direction parallel to the axis (4a) of the drive axle (4).

3. The lift truck according to any one of the preceding claims, **characterised in that** it comprises a system (18) for cooling the electric motor (8) and the block of cells (13) of the energy storage unit (11).

4. The lift truck according to the preceding claim, **characterized in that** the cooling system (18) has a liquid as the cooling fluid.
